# EUROPEAN PATENT APPLICATION

(11) **EP 1 624 469 A2**
(43) Date of publication of application: **08.02.2006**
(21) Application number: 05254881.5
(22) Date of filing: 04.08.2005
(51) Int. Cl.: H01F 7/16, F16K 31/06

(54) **Rapid response solenoid for electromagnetic operated valve**

(30) Priority: 06.08.2004 US 599814 P; 27.07.2005 US 191224
(71) Applicant: MAC Valves Inc., Wixom, Michigan 48393 (US)
(72) Inventor: Neff, Robert H., Bloomfield Village, Michigan 48301 (US); Janssen, Eric P., Howell, Michigan 48843 (US)
(74) Representative: Rees, Alexander Ellison

(57) **Abstract**

A solenoid (12) for an electromagnetically operated valve (10) includes a bobbin (66) having a substantially rectangular or elliptical cross section, a pole plate (28) stationary with respect to the bobbin, and an armature (34) slidable within the bobbin in response to a magnetic field generated by the coil (32) through the pole plate. A coil wound around the bobbin has a rectangular cross section which on a short axis side includes a width W. A relation between width W and a virtual cylindrical iron core of diameter D having the same cross sectional area as an armature cross sectional area is expressed as D=(0.4 to 0.8) W. A ratio of a length A of a long axis side of the armature to a length B of a short axis side of the armature has a range between 3.1≤ (A/B)≤4.5.

## Description

### CROSS-REFERENCE TO RELATED APPLICATIONS

This application claims the benefit of U.S. Provisional Application Serial Number 60/599,814 filed August 6, 2004, the disclosure of which is incorporated herein by reference.

### FIELD OF THE INVENTION

The present invention relates in general to solenoids and more specifically to solenoids used in conjunction with a valve to control operation of the valve.

### BACKGROUND OF THE INVENTION

Electromagnetically operated valves are known which include a bobbin supporting a winding formed as a coil of wire. A stationary core or pole plate typically made of a conductive material such as iron is mounted adjacent to a center hole of the bobbin. A movable armature is slidably disposed within the aperture of the bobbin such that when electrical current is passed through the winding of the coil, the armature is induced to translate toward the stationary pole plate. This translation of the armature can be mechanically used to actuate a valve assembly through the use of a pushpin in contact with the armature and which is also in contact with a valve assembly within the valve body. A biasing device is typically provided to return the valve assembly to its original position which also displaces the armature back to its de-energized location. An operating cycle of one of these electromagnetically operated valves is therefore the time from initial energizing of the coil to the time when the armature has returned to its original position.

When it is desirable to reduce the body size of the valve in order to maximize a quantity of valves for a particular operation, the winding of the coil is necessarily reduced in size, thereby reducing the attraction force between the armature and the pole plate and/or reducing the operating speed of the valve. To resolve this problem, solenoid geometry has changed such that the geometry of the coil is shaped substantially rectangular permitting an equal number of windings of the coil in a width of the solenoid commensurate with the necessary use. An example of a rectangularly shaped coil and its construction is provided in United States Patent 6,698,713 issued to Sato et al. on March 2, 2004. The patent to Sato et al. also identifies a known method to calculate the attraction force generated between an armature and a pole plate, and a power consumption.

The U.S. Patent to Sato discloses a ratio of a length "A" of a longer axis or side of a solenoid inner coil to a length "B" of a shorter axis or side of the solenoid inner coil having a relationship expressed as: 1.3 ≤A/B≤ 3.0. The limited ratio range of Sato restricts the geometry of the solenoid and therefore can preclude a desired solenoid wattage and/or valve operating speed for narrow or tightly arranged solenoid/valve applications.

### SUMMARY OF THE INVENTION

A rapid response solenoid for an electromagnetically operated valve according to a preferred embodiment of the present invention includes a bobbin having a substantially rectangular shaped cross section. A coil is wound around the bobbin. A stationary pole plate is fixed in relation to the bobbin. An armature is slidably disposed within the bobbin and slides toward the pole plate in response to a magnetic field generated by the coil through the pole plate. The armature has a substantially rectangular shape having a short axis side and a long axis side. A ratio of a length A of the long axis side of the armature to a length B of the short axis side of the armature has an operable range of 3.1 ≤ (A/B) ≤ 4.5.

According to another preferred embodiment of the present invention, the stationary pole plate is positioned at a bobbin first end having a portion of the pole plate extending within a through aperture formed in the bobbin. A bushing is disposed within the through aperture and substantially fixed in relation to the bobbin. The bushing is positioned between the armature and an inner wall of the bobbin and provides a sliding fit between the armature and the bobbin inner wall. A brass or other non-magnetic material used for bushing reduces friction and magnetic attraction of the armature to the bushing and therefore increases a de-energized return speed of a valve connected to the solenoid.

Advantages of the present invention include the capability of accepting higher operating wattages, a faster cycle time for an attached valve and a solenoid assembly less susceptible to wear from friction of the moving parts. A smaller wire size is also used which provides additional benefit to the solenoid operating force and power generated. By using the geometry for a solenoid of the present invention, an improved cycle time at a given solenoid size is also provided.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a perspective view of a rapid response solenoid for an electromagnetic operated valve of the present invention;

Figure 2 is a cross-sectional elevational view taken at section 2-2 of Figure 1;

Figure 3 is a cross-sectional plan view taken at section 3-3 of Figure 2; and

Figure 4 is a cross-sectional elevational view similar to Figure 2, showing a valve energized/open position.

### DETAILED DESCRIPTION OF THE PREFERRED EMBODIMENTS

The following description of the preferred embodiments is merely exemplary in nature and is in no way intended to limit the invention, its application, or uses.

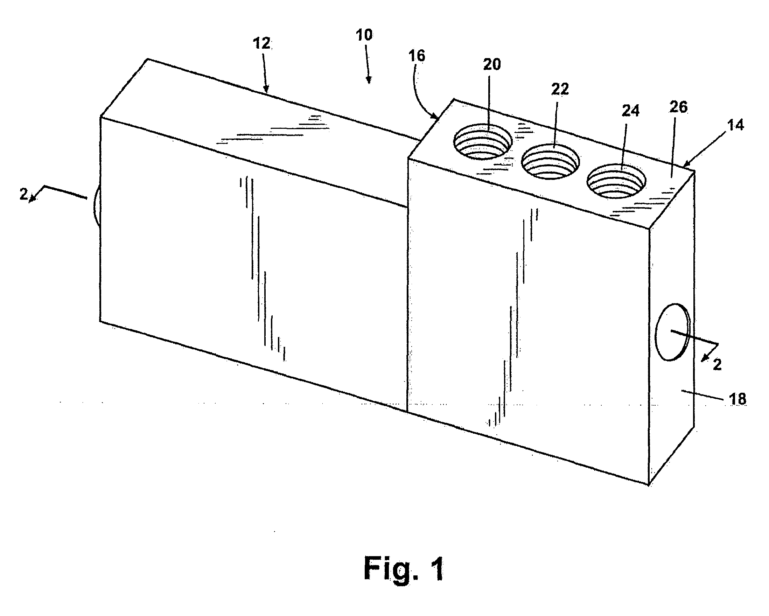

According to a preferred embodiment of the present invention and referring generally to Figure 1, a valve assembly 10 includes a solenoid 12 connectably attached to a valve body 14 at a valve body mounting face 16. lntemal components of valve body 14 are generally loaded via a valve loading face 18. A valve body inlet port 20, and outlet port 22 and an exhaust port 24 are exemplary of fluid ports disposed via a fluid system service face 26 of valve body 14. The invention is not limited to a particular orientation or quantity of ports.

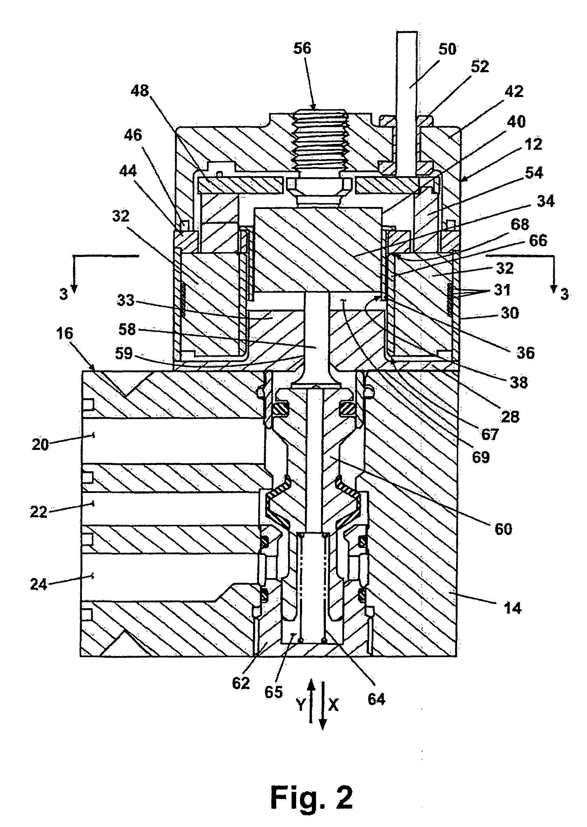

Referring next to Figure 2, components of the solenoid 12 include a pole plate 28 which forms an interface between solenoid 12 and valve body 14 via valve body mounting face 16. A flux frame 30 formed generally at a perimeter of pole plate 28 provides an external limit for individual wires forming a coil 32. Coil 32 includes at least one or a plurality of individual wires 31 in one or more windings provided in wire sizes ranging from approximately 33.5 to 35.5 gauge. A first portion 33 of pole plate 28 is disposed within an internal cavity of coil 32. An armature 34 is also positioned within the internal cavity of coil 32. Both pole plate 28 and armature 34 are typically provided of electrically conductive and magnetic materials such as iron. Armature 34 is slidably disposed within a bushing 36 such that a bushing inner wall 38 is in slidable contact with an armature outer wall 40.

Solenoid 12 is also provided with a cover 42 which seals solenoid 12 from the external environment. Cover 42 is connected to flux frame 30 by an adapter 44 and one or more fasteners 46. Within cover 42 is disposed a current distribution plate 48, which is in direct contact with a lead pin 50. Lead pin 50 is disposed within an insulating bushing 52 to electrically isolate lead pin 50 from cover 42. Electrical current provided to the windings of coil 32 is provided via lead pin 50 through current distribution plate 48 and a coil connector 54.

Armature 34 is positioned as shown in Figure 2 in a de-energized condition of solenoid 12. In this condition, an adjustment device 56 is in contact with armature 34, forming a stop for armature 34 in the de-energized position. Adjustment device 56 can be threaded such that the positioning of armature 34 can be adjusted by changing the engagement depth of adjustment device 56 within cover 42. Armature 34 displaces from the de-energized position in the direction of arrow "X" when current is supplied to coil 32 such that a magnetic flux is created between coil 32, pole plate 28 and armature 34. Armature 34 is thereby drawn towards pole plate 28. This translation in the direction of arrow "X" of armature 34 also displaces a pushpin 58 which is in direct contact with armature 34. A clearance aperture 59 is provided within pole plate 28 to allow slidable displacement of pushpin 58 in either the energized direction of arrow "X" or the return (de-energized) direction of arrow "Y".

Pushpin 58 directly contacts a first end of a valve member 60 provided within valve body 14. Valve member 60 is slidably disposed within valve body 14 such that valve member 60 is displaceable in each of the directions of arrows "X" and "Y". In the solenoid de-energized position shown in Figure 2, valve member 60 is in a closed position wherein fluid pressure in inlet port 20 is isolated from both outlet port 22 and exhaust port 24. An end retainer 62 slidably receives a second end of valve member 60 and acts as a positive stop for the sliding motion of valve member 60. End retainer 62 is fastenably connected, generally via threads, to valve body 14. A biasing element 64 is positioned between and contacts both valve member 60 and end retainer 62. Biasing element 64 biases valve member 60 away from end retainer 62 and provides a normal biasing force in the direction of arrow "Y" to return valve member 60 and pushpin 58 together with armature 34 in the direction of arrow "Y" when solenoid 12 is de-energized. Biasing element 64 and valve member 60 are positioned within a valve bore 65 of valve body 14. Valve member 60 is exemplary of a plurality of designs for a valve member. The invention is not limited to a particular design for valve member 60. Coil 32 is provided in a substantially rectangular or elliptical shape based on winding the individual wires of coil 32 about a bobbin 66 which is itself substantially rectangular or elliptically shaped. Bobbin 66 includes a first end 67 and a second end 68. A through-aperture 69 is created within bobbin 66 which slidably receives first portion 33 of pole plate 28 and also receives bushing 36.

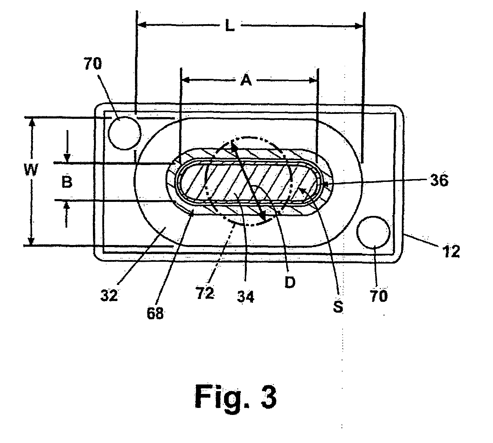

Referring generally now to Figure 3, a cross-sectional geometry of solenoid 12 is provided. A coil width "W" is maximized within a total width of solenoid 12. A plurality of apertures 70 are also shown, each aperture 70 providing access for a fastener (riot shown) used to connectably mount solenoid 12 to valve body 14. Coil width "W" defines a short length axis of coil 32. Bushing 36 disposed within through aperture 69 of bobbin 66 defines an inner perimeter for coil 32 and a cross-sectional area "S" of armature 34. A circle 72 having a diameter "D" represents a virtual cylindrical iron core having the same cross-sectional area as cross-sectional area "S". Circle 72 therefore represents only a virtual item used to establish a comparison to a theoretical circular iron core. Expressed as an equation, S = (πD²/4). Diameter "D" of circle 72 and coil width "W" are related by the equation: D=(0.4 to 0.8)W. A further relationship exists for armature 34 wherein a long axis "A" of armature 34 is related to the short axis or length "B" of armature 34. The range or limits of a ratio of "A" to "B" for armature 34 are provided by the equation: 3.1 ≤ A/B ≤ 4.5.

Providing the above range of the ratio of "A" to "B" for armature 34 permits maximizing a length "L" of coil 32 compared ta coil width "W" such that a higher current and wattage can be used for coil 32. It is common in the industry for solenoid operated valves to use an actuation wattage of approximately four to five watts. Faster acting solenoids are available using approximately 16 watts of electrical power. A solenoid 12 of the present invention permits operation up to approximately 215 watts. This is accomplished by the geometry of coil 32 and armature 34 and in part through the use of smaller gauge wire within coil 32, ranging from approximately 33.5 to 35.5 gauge. Increasing the wattage for solenoid 12 provides a significantly faster acting valve assembly 10 because the higher wattage creates a greater magnetic flux in coil 32 which increases the travel speed of armature 34. Cycle time can be reduced from known 4 watt solenoid valve designs having cycle times of approximately 3 milliseconds to approximately 340 microseconds using a solenoid design according to the present invention.

A further improvement of the valve assembly 10 of the present invention is provided by the use of a non-magnetic material, and preferably a brass material, for bushing 36. A non-magnetic material used for bushing 36 and in particular a material such as brass provides a low coefficient of friction between armature 34 and bushing 36. In addition, the non-magnetic nature of bushing 36 reduces the likelihood of magnetic attraction between armature 34 and bushing 36 during its return travel to the non-energized position shown in Figure 2. This further reduces the operating time of valve assembly 10. The operating time of valve assembly 10, i.e., its operating cycle, is defined as the time required between the initiation of current flow to coil 32 and the initial displacement of armature 34 until armature 34 returns to the de-energized position shown in Figure 2. An overall reduced cycle time is provided by valve assembly 10 of the present invention, permitting use of valve assembly 10 in operations such as sorting operations which require very high rates of material transfer and very low cycle times of the valves operating the sorting machinery.

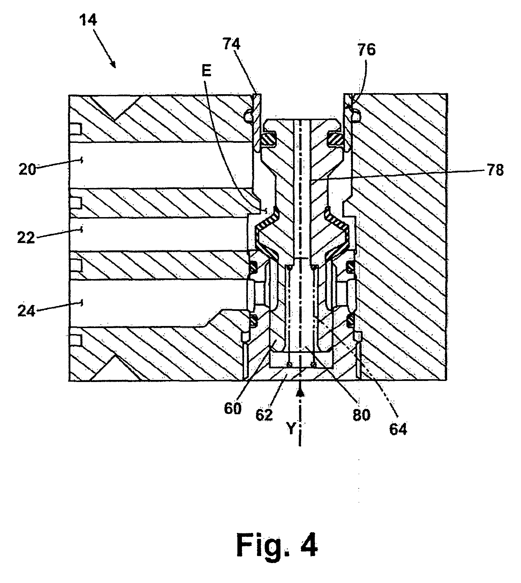

Referring to Figure 4, valve member 60 is shown positioned in an energized condition of solenoid 12. A flow passage "E" is provided in this position between inlet port 20 and outlet port 22. Biasing element 64 is compressed and provides biasing force to return valve member 60 to the position shown in Figure 2 when solenoid 12 is de-energized. Figure 4 further shows an insert 74 having an inner wall 76 which slidably supports an upper end (as shown in Figure 4) of valve member 60. A passage 78 is longitudinally provided through valve member 60 allowing fluid at either end of valve member 60 to displace to the opposite end when valve member 60 translates in either the direction of arrow "X" or arrow "Y". The biasing force in the direction of arrow "Y" provided by biasing element 64 redirects valve member 60 to the position shown in Figure 2. Fluid in a fluid/biasing member chamber 80 which partially encloses biasing element 64 is also displaced via passage 78 to allow translation of valve member 60 in either the direction of arrow "X" or arrow "Y".

Advantages of the present invention include the capability of using higher operating wattages to achieve faster cycle times and/or increased solenoid driving force for solenoid actuated valves, and providing a solenoid assembly less susceptible to wear from friction of the moving parts. A smaller wire size is also used which further increases the solenoid operating force and power generated by the solenoid. By using the geometry for a solenoid of the present invention, an improved cycle time at a given solenoid size is also provided.

The description of the invention is merely exemplary in nature and, thus, variations that do not depart from the gist of the invention are intended to be within the scope of the invention. For example, additional ports or ports oriented in a different configuration from those shown in Figure 2 can be used. The geometry of valve member 60 can therefore vary to accommodate different valve port designs, locations and quantities. An exemplary size for a valve body of the present invention is approximately 0.81 in long (2.06 cm), 0.66 in high (1.66 cm) and 0.31 in depth (0.79 cm). An exemplary size for a solenoid of the present invention is approximately 0.31 in deep (0.79 cm) substantially matching the depth of the valve body, with a length and height of approximately ¾ of the valve body dimensions. These dimensions are exemplary only and the valve body and solenoid can be varied from these dimensions. Such variations are not to be regarded as a departure from the spirit and scope of the invention.

## Claims

1. A solenoid, comprising:
a bobbin having a substantially rectangular shaped cross section;
a coil wound around the bobbin;
an armature slidably disposed within the bobbin in response to a magnetic field generated by the coil, the armature defining a substantially rectangular shape having a short axis side and a long axis side; and
a ratio of a length A of the long axis side of the armature to a length B of the short axis side of the armature having an operable range of 3.1 ≤ (A/B) ≤ 4.5.

2. The solenoid of Claim 2, further comprising:
a through aperture created in the bobbin; and
a bushing disposed within the through aperture of the bobbin and positioned between the bobbin and the armature.

3. The solenoid of Claim 1, further comprising:
a pole plate fixed in relation to the bobbin, the magnetic field being generated by the coil through the pole plate;
wherein the armature is slidable toward the pole plate in response to the magnetic field generated by the coil through the pole plate.

4. The solenoid of Claim 3, further comprising:
a first end and a second end of the bobbin;
wherein the pole plate is positioned proximate to the first end of the bobbin and the armature is slidably received through the second end of the bobbin.

5. The solenoid of Claim 4, wherein the pole plate further comprises a pole plate portion positioned within the through aperture of the bobbin.

6. The solenoid of Claim 1, wherein the bushing comprises a non-magnetic metallic material.

7. The solenoid of Claim 1, further comprising:
a width W of a short axis side of the coil;
a first cross sectional area of the armature; and
wherein a relation between a virtual cylindrical iron core having a diameter D to width W is expressed as D=(0.4 to 0.8) W, the virtual cylindrical iron core having a second cross sectional area equal to the first cross sectional area of the armature.

8. The solenoid of Claim 1, wherein the coil further comprises wire having a wire gauge size ranging from 33.5 to 35.5 gauge.

9. A solenoid, comprising:
a bobbin having a substantially rectangular shaped cross section;
a coil wound around the bobbin;
an armature slidably disposed within the bobbin and slidable in response to a magnetic field generated by the coil, the armature defining a substantially rectangular shape having a short axis side, a long axis side, and a first cross sectional- area;
a ratio of a length A of the long axis side of the armature to a length B of the short axis side of the armature having an operable range of 3.1 ≤ (A/B) ≤ 4.5; and
wherein a relation between a virtual cylindrical iron core having a diameter D to width W is expressed as D=(0.4 to 0.8) W, the virtual cylindrical iron core having a second cross sectional area equal to the first cross sectional area of the armature.

10. The solenoid of Claim 9, further comprising:
a bushing received within a through aperture created in the bobbin, the bushing substantially fixed in relation to the bobbin and positioned between the armature and the bobbin;
wherein the bushing slidably receives the armature.

11. The solenoid of Claim 10, wherein the bushing comprises a non-magnetic metal material.

12. The solenoid of Claim 10, wherein the bushing comprises a brass material.

13. The solenoid of Claim 9, further comprising:
a stationary pole plate connectable to the bobbin; and
a pushpin directly contacted by the armature and slidably translatable in an aperture created through the stationary pole plate;
wherein the armature is slidable toward the stationary pole plate in response to the magnetic field generated by the coil through the stationary pole plate.

14. The solenoid of Claim 13, wherein the stationary pole plate comprises a portion positionable within the through aperture of the bobbin.

15. The solenoid of Claim 9, wherein the coil further comprises wire having a wire gauge size ranging from 33.5 to 35.5 gauge.

16. A solenoid actuated valve, comprising:
a valve; and
a substantially rectangular shaped solenoid connected to the valve and operable to reposition the valve between open and closed positions, the solenoid including:
a bobbin having a substantially rectangular shaped cross section;
a coil wound around the bobbin;
a stationary pole plate fixed in relation to the bobbin;
an armature slidably disposed within the bobbin and slidable toward the pole plate in response to a magnetic field generated by the coil through the pole plate, the armature defining a substantially rectangular shape having a short axis side and a long axis side; and
a ratio of a length A of the long axis side of the armature to a length B of the short axis side of the armature having an operable range of 3.1 ≤ (A/B) ≤ 4.5.

17. The valve of Claim 16, further comprising:
a substantially rectangular shaped valve body; and
a valve member slidably positioned within the valve body.

18. The valve of Claim 17, wherein the solenoid further comprises a pushpin in direct contact with the armature and translated by motion of the armature to reposition the valve member.

19. The valve of Claim 18, further comprising:
a portion of the pole plate being positionable within a bobbin through aperture; and
a pole plate through aperture created slidably receiving the pushpin.

20. The valve of Claim 17, further comprising a biasing element operable to bias the valve member from the open to the closed position.

21. The valve of Claim 17, wherein the valve body further comprises an inlet port, an outlet port and an exhaust port, the inlet port being isolated by the valve member from both the outlet port and the exhaust port in the closed position.

22. The valve of Claim 16, wherein the coil further comprises wire having a wire gauge size ranging from 33.5 to 35.5 gauge.

23. A method for increasing the operating speed of a solenoid for an electromagnetically operated valve, the solenoid including a bobbin having a substantially rectangular shaped cross section; a coil wound around the bobbin; and an armature slidably disposed within the bobbin, the armature defining a substantially rectangular shape having a short axis side and a long axis side, the method comprising:
manufacturing the armature having a ratio of a length A of the long axis side of the armature to a length B of the short axis side of the armature within a range of 3.1 ≤ (A/B) ≤ 4.5; and
energizing the coil to operably translate the armature using a magnetic field generated by the coil and passing through the armature.

24. The method of Claim 23, further comprising:
connecting the armature using a pushpin to a valve member; and
repositioning the valve member from a closed position to an open position during the energizing step.

25. The method of Claim 24, further comprising:
de-energizing the coil; and
biasing the valve member to return the valve member to the closed position upon de-energizing the coil.

26. The method of Claim 25, further comprising positioning a bushing of a non-magnetic material between the armature and the bobbin to operably reduce friction and magnetic attraction between the armature and the bobbin and increase a de-energized return speed of the armature.

27. The method of Claim 23, further comprising winding the coil with wire having a wire gauge size ranging from 33.5 to 35.5 gauge,

28. The method of Claim 27, further comprising applying an electrical power of up to approximately 215 watts to the coil during the energizing step.

29. The method of Claim 28, further comprising using at least one of the electrical power and the wire gauge size to operably obtain a cycle time of the solenoid and valve of approximately 340 milliseconds.

30. The method of Claim 23, further comprising:
fixing a pole plate in relation to the bobbin; and
positioning a portion of the pole plate in a through aperture of the bobbin.
